# EUROPEAN PATENT APPLICATION

(11) **EP 3 450 946 A1**
(43) Date of publication of application: **06.03.2019**
(21) Application number: 18191646.1
(22) Date of filing: 30.08.2018
(51) Int. Cl.: G01K 11/12, G01K 3/04, G01K 15/00, G01K 1/02

(54) **READING PROCESSING APPARATUS FOR A TEMPERATURE DISPLAY DEVICE, SERVER APPARATUS, READING PROCESSING SYSTEM FOR A TEMPERATURE DISPLAY DEVICE, AND METHOD OF CONTROLLING A READING PROCESSING APPARATUS FOR A TEMPERATURE DISPLAY DEVICE**

(30) Priority: 30.08.2017 JP 2017165084; 30.05.2018 JP 2018103154
(71) Applicant: Seiko Instruments Inc., Chiba-shi, Chiba 261-8507 (JP)
(72) Inventor: TANI, Kazuo, Chiba-shi, Chiba 261-8507 (JP); SATO, Yoshinori, Chiba-shi, Chiba 261-8507 (JP); YAMAMOTO, Takashi, Chiba-shi, Chiba 261-8507 (JP); SAMBONGI, Norimitsu, Chiba-shi, Chiba 261-8507 (JP)
(74) Representative: Miller Sturt Kenyon

(57) **Abstract**

A reading processing apparatus (10) for a temperature display device (20) includes: an obtaining device (101) obtaining an image of the temperature display device (20); a storage (105) storing color fading information for each temperature; and a temperature estimation device (106) estimating an ambient temperature of the temperature display device (20). The obtaining device (101) includes a time information image indicating time information and a temperature information image displaying information about a temperature and an elapsed time by a change in color, and to which image pickup time information is added. The color fading information indicates a relation between a color changed by a temperature change, an elapsed time, and a temperature. The temperature estimating unit estimates the temperature to which the temperature display device (20) is exposed by checking color information and elapsed time detected from the image against the color fading information stored in the storage (105).

## Description

### BACKGROUND OF THE INVENTION

### 1. Field of the Invention

The present invention relates to a reading processing apparatus for a temperature display device, a server apparatus, a reading processing system for a temperature display device, and a method of controlling a reading processing apparatus for a temperature display device.

### 2. Description of the Related Art

Hitherto, it is well understood from experience that food and medicines, for example, generally require paying attention to the time elapsed since manufacture or the breaking of the seal, and to the storage temperature environment. For instance, dairy products deteriorate rapidly after manufacture.

Most types of medicines expected to cure hard-to-cure diseases do not work unless the manners and temperature environments of storage are ones in which those particular medicines are supposed to be stored. Vaccines, which are a typical example of medicines used in winter every year, are biologically derived products to be stored in a manner that varies from one type to another type, and the potency of a vaccine changes depending on how the vaccine is handled. A rapid increase in the number of highly temperature-sensitive products is predicted for the future markets of food and medicine. Proper management of each individual product as a tool for solving social problems in terms of environment and resources is becoming more and more important in a diversity of uses.

In the equipment infrastructure business and similar businesses in industry, for example, temperature management is known as an important control point in the monitoring of a facility or the like, in product development process, and in quality control, and electronic measuring instruments are used for temperature management. Electronic measuring instruments are not suitable for the temperature management of food and medicines because electronic measuring instruments have a battery driven-type operation principle, cost too much to be used for each individual article of food or each individual package of medicine, and are not easy to handle. Other temperature management tools include thermo labels, which utilize a thermo-sensitive ink material. Thermo labels, though easy to handle, do not have a temperature detection starting function, and are reversible due to the physical properties of their material and their color development principle. This limits objects whose temperature can be detected by thermo labels and scenes in which thermo labels can be used, and also makes it difficult to measure temperature with high precision.

In light of such demands of the market, a temperature management technology that uses a temperature history display material containing a photochromic compound has been proposed. The temperature history display material containing a photochromic compound makes use of characteristic physical properties of a material different from a thermo-sensitive ink, and can be made into a simple and easy temperature indicator, tag, or label.

Photochromism is a phenomenon in which two isomers (A and B) different from each other in absorption spectrum are generated reversibly from a single chemical species by the effect of light, without changing the molecular weight of the species. Photochromism is also a phenomenon in which an isomer A irradiated with light of a particular wavelength is transformed into an isomer B by a change in bonding manner or electronic state, and the resultant change in ultraviolet/visible absorption spectrum changes the color. Such an optical function element has three characteristics: (1) having a switch function, (2) losing color irrevocably when heated, and (3) developing a color that is visible and in a stable state.

The principle of the technology using photochromism is to use a color change caused by an external stimulus, which means that power consumption is zero with the technology. The technology detects a change in ambient temperature from color fading characteristics and from a color difference caused by the elapse of time, and accordingly involves the displaying and recording of a temperature history, which can be used as evidence. The technology is also capable of making a device small in size and thin in film thickness, and is consequently not specific in terms of location in which the technology is used and objects to which the technology is applied. The ensuing flexibility makes the technology applicable to any object whose temperature is to be detected irrespective of the size and type of the object. The technology is further expected to provide high disposability, reduced cost, and convenience to a device made small in size and thin in film thickness by the technology, which means that the device is promising as a new temperature indicator.

However, with the technology using photochromism described above, a color change in a small-sized, thin-film device is visually checked and determined as a measurement result, which lowers measurement precision and repeat accuracy. In the determination technology is accordingly low in the measurement precision of the ambient temperature of an object, and has a possibility in that the elapsed time cannot determined appropriately.

### SUMMARY OF THE INVENTION

In view of the problems of the technology using photochromism, a reading processing apparatus for a temperature display device, a server apparatus, a reading processing system for a temperature display device, and a method of controlling a reading processing apparatus for a temperature display device, with which the ambient temperature of an object and the elapsed time can be estimated with precision, are demanded to be provided.

According to one embodiment of the present invention, there is provided a reading processing apparatus for a temperature display device, including: an obtaining device configured to obtain an image of a temperature display device, which includes a time information image indicating time information and a temperature information image displaying information about a temperature and an elapsed time by a change in color, and to which image pickup time information is added; a storage configured to store, for each temperature, color fading information, which indicates a relation between a color changed by a temperature change, an elapsed time, and a temperature; and a temperature estimation device configured to estimate an ambient temperature of the temperature display device based on color information about a color changed by a temperature that is detected from temperature information of the temperature information image and by the elapsed time, on an elapsed time that is calculated from the time information of the time information image, and on the color fading information stored in the storage.

In the above-mentioned reading processing apparatus according to the one embodiment of the present invention, preferably the temperature estimation device is configured to estimate the ambient temperature of the temperature display device while limiting wavelength components in the temperature information image.

In the above-mentioned reading processing apparatus according to the one embodiment of the present invention, preferably the temperature estimation device is configured to convert the temperature information image into a grayscale image, and estimate the ambient temperature of the temperature display device based on shades of the grayscale image.

In the above-mentioned reading processing apparatus according to the one embodiment of the present invention, preferably the temperature display device includes: an area containing the time information, which indicates a time of issuance of the temperature display device; and an area in which a temperature change is detected and the temperature information is displayed by a change in color, and the area displaying the temperature information changes color with the elapsed time.

In the above-mentioned reading processing apparatus according to the one embodiment of the present invention, preferably the temperature display device includes a calibration-use area for calibration of information about a color, the storage is configured to store information about a color of the calibration-use area and a calibration threshold for determining whether calibration is to be executed, the obtaining device is configured to obtain an image of the calibration-use area, and the temperature estimation device is configured to compare information about a color detected from the obtained image of the calibration-use area and the information about the color of the calibration-use area stored in the storage, compare a result of the comparison to the calibration threshold stored in the storage, and determine, from a result of the comparison, whether the color information detected from the temperature information image is to be calibrated.

According to one embodiment of the present invention, there is provided a server apparatus, including: a communicator configured to obtain an image of a temperature display device, which includes a time information image indicating time information and a temperature information image displaying information about a temperature and an elapsed time by a change in color, and to which image pickup time information indicating a time at which the image is picked up by a reading processing apparatus for a temperature display device is added; a storage configured to store, for each temperature, color fading information, which indicates a relation between information about a color, an elapsed time, and a temperature; and a controller configured to estimate an ambient temperature of the temperature display device based on color information about a color changed by a temperature that is detected from temperature information of the temperature information image and by the elapsed time, on an elapsed time that is calculated from the time information of the time information image, and on the color fading information stored in the storage,
wherein the communicator is configured to output information indicating the estimated ambient temperature of the temperature display device to the reading processing apparatus for a temperature display device.

According to one embodiment of the present invention, there is provided a reading processing system, including: a reading processing apparatus for a temperature display device; and a server apparatus, wherein the reading processing apparatus for a temperature display device includes: an image pickup device configured to pick up an image of a temperature display device, which includes a time information image indicating time information and a temperature information image displaying information about a temperature and an elapsed time by a change in color; a communicator configured to add information indicating an image pickup time at which the image is picked up to the image of the temperature display device picked up by the image pickup device, transmit the image with the added information to the server apparatus, and receive information transmitted from the server apparatus and indicating an ambient temperature of the temperature display device; and a display configured to display the received information indicating the ambient temperature of the temperature display device, and wherein the server apparatus includes: a communicator configured to obtain the image of the temperature display device, which is picked up by the reading processing apparatus for a temperature display device, which includes the time information image indicating the time information and the temperature information image displaying information about a temperature and an elapsed time by a change in color, and to which image pickup time information indicating the image pickup time is added, and output, to the reading processing apparatus for a temperature display device, the information indicating the ambient temperature of the temperature display device that is estimated by a controller; a storage configured to store, for each temperature, color fading information, which indicates a relation between information about a color, an elapsed time, and a temperature; and the controller configured to estimate the ambient temperature of the temperature display device based on color information about a color changed by a temperature that is detected from temperature information of the temperature information image and by the elapsed time, on an elapsed time that is calculated from the time information of the time information image and from the image pickup time, and on the color fading information stored in the storage.

According to one embodiment of the present invention, there is provided a method of controlling a reading processing apparatus for a temperature display device, the reading processing apparatus including a storage, which is configured to store, for each temperature, color fading information indicating a relation between a color changed by a temperature change, an elapsed time, and a temperature, the method including: obtaining, by an obtaining device, an image of a temperature display device, which is picked up by the reading processing apparatus for a temperature display device, which includes a time information image indicating time information and a temperature information image displaying information about a temperature and an elapsed time by a change in color, and to which image pickup time information indicating an image pickup time at which the image is picked up is added; recognizing, by a temperature estimation device, color information about a color changed by a temperature that is detected from temperature information of the temperature information image and by the elapsed time; calculating, by the temperature estimation device, an elapsed time from the time information of the time information image and from the image pickup time; and estimating, by the temperature estimation device, an ambient temperature of the temperature display device based on the color information, on the elapsed time, and on the color fading information stored in the storage.

### BRIEF DESCRIPTION OF THE DRAWINGS

Embodiments of the present invention will now be described by way of further example only and with reference to the accompanying drawings, in which:
FIG. 1 is a diagram for illustrating an example of a temperature display device in a first embodiment of the present invention.
FIG. 2 is a graph for showing an example of color fading characteristics of a temperature indicator in the first embodiment.
FIG. 3 is a block diagram for illustrating a configuration example of a reading processing system for a temperature display device according to the first embodiment.
FIG. 4 is a flow chart for illustrating an example of steps of reading information of the temperature display device and processing the information in the first embodiment.
FIG. 5 is a graph for showing an example of a relation between the chroma of the color of the temperature indicator and the elapsed time in the first embodiment.
FIG. 6 is a graph for showing an image of a relation between the elapsed time and the chroma of a color that is observed when an object to which the temperature display device is attached is exposed to a 2°C-temperature environment in the first embodiment.
FIG. 7 is a graph for showing an image of a relation between the elapsed time and the chroma of a color that is observed when an object to which the temperature display device is attached is exposed to a 5°C-temperature environment in the first embodiment.
FIG. 8 is a graph for showing an image of a relation between the elapsed time and the chroma of a color that is observed when an object to which the temperature display device is attached is exposed to an 8°C-temperature environment in the first embodiment.
FIG. 9 is a diagram for illustrating an image of ambient temperature identification in reading processing in the first embodiment.
FIG. 10 is a table for showing an example of a relation between the elapsed time, color fading, and the temperature (color fading information), which is stored in a storage in the first embodiment.
FIG. 11 is a diagram for illustrating an example of information displayed on a display of a reading processing apparatus according to the first embodiment.
FIG. 12 is a diagram for illustrating an example of a temperature display device including a calibration-use color information section in a second embodiment of the present invention.
FIG. 13 is a block diagram for illustrating a configuration example of a reading processing system for a temperature display device according to the second embodiment.
FIG. 14 is a flow chart for illustrating an example of processing steps that are executed by the reading processing system for a temperature display device according to the second embodiment.
FIG. 15 is a table for showing an example of correction coefficient information, which is stored in a storage of a server apparatus according to the second embodiment.
FIG. 16 is a schematic diagram for illustrating a temperature display device issuing apparatus in the embodiments.
FIG. 17 is a block diagram for illustrating a configuration example of the issuing apparatus in the embodiments.

### DESCRIPTION OF THE EMBODIMENTS

### First Embodiment

Embodiments of the present invention are described below with reference to the drawings. An example of a temperature display device is described first.

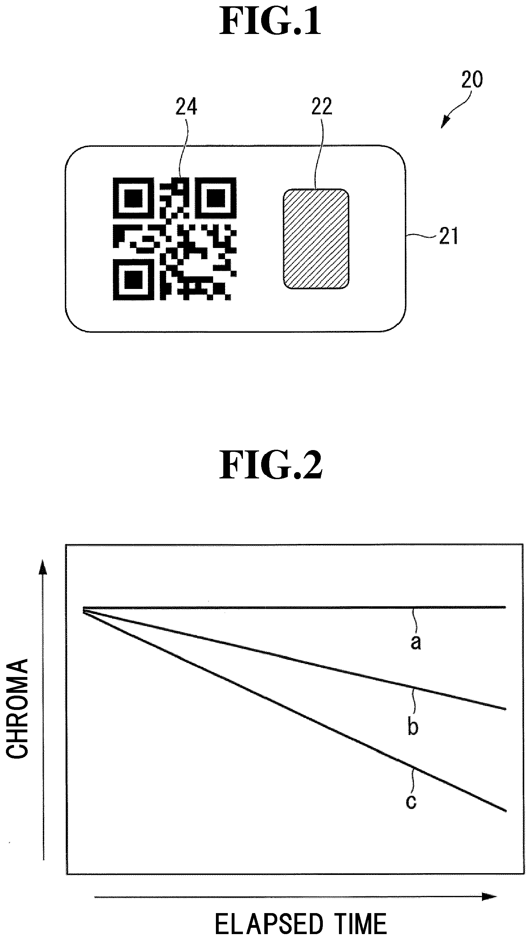

FIG. 1 is a diagram for illustrating an example of a temperature display device 20 according to a first embodiment of the present invention. As illustrated in FIG. 1, the temperature display device 20 includes a base sheet 21, a temperature indicator 22, and a time information display section 24.

The temperature display device 20 is attached to the package or the like of an object (e.g., food or a medicine) whose temperature is to be managed.

The temperature display device 20 is assumed to be attached, when in use, to an object that is a target of temperature detection. The shape and size of the base sheet 21 are therefore selected based on the specifications, size, usage, and the like of a target product. The base sheet 21 may have an adhesive layer on one side. This way, the temperature display device 20 can be stuck to a target product when in use. Examples of the substance of the base sheet 21 include glass, plastic, paper, and metal (e.g., aluminum). The base sheet 21 may have a board shape, a film shape, or other similar shapes. It is preferred for the base sheet 21 to have flexibility. The base sheet 21 may be transparent or non-transparent with respect to light (e.g., an ultraviolet ray) irradiating the temperature indicator 22. The base sheet 21 may have, for example, a card shape substantially rectangular in plan view. A substance easy to print on by a recording method used in a printing/recording device described later may be selected for the base sheet 21. Instead of the recording method, the forming of the temperature indicator 22, ink adhesion, the pattern arrangement of printed pieces, or other factors may be taken into consideration in the selection of the substance of the base sheet 21. For example, when at least a part of a surface area of the base sheet 21 is made of heat-sensitive paper, the heat-sensitive paper area develops color from being heated. The heat-sensitive paper area can be printed on when the printing/recording device adopts a thermal recording method.

The temperature indicator 22 has a function of starting temperature detection when irradiated with light. The temperature indicator 22 includes, for example, a material whose color is changed by the irradiation of light of a particular wavelength. When a material whose color is changed by light irradiation is used, the ambient temperature of the temperature display device 20 and the elapsed time at the ambient temperature can be checked by recognizing color information. A material developing color by the irradiation of light of a particular wavelength (e.g., an ultraviolet ray), thus becoming capable of displaying a change in temperature, for example, a material whose developed color fades (is lost) irreversibly at a rate that varies depending on the temperature, is preferred as the color changing material. This material can start temperature detection by developing color by the irradiation of light of a particular wavelength. When the light is an ultraviolet ray, the irradiation of an ultraviolet ray causes the temperature indicator 22 to develop color. With the use of the ultraviolet range or other light wavelength ranges outside the visible light range, the start of the temperature detection of the temperature indicator can be triggered at any timing. Examples of a material that develops color by irradiation of light of a particular wavelength and whose developed color fades (is lost) at a rate that varies depending on the temperature include a photochromic compound. Examples of the photochromic compound include diarylethene-based, azobenzene-based, spiropyran-based, and fulgide-based photochromic compounds. In particular, of those, the diarylethene-based photochromic compound is preferred from the viewpoint of, for example, heat stability, repetition durability, high sensitivity, and photoreactivity under various temperatures. An example of the diarylethene-based photochromic compound is shown in the general formula (1): 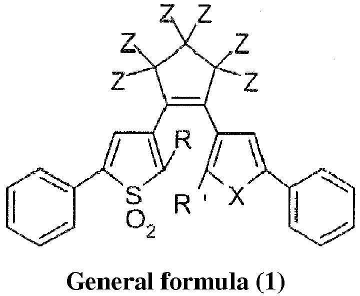 in the general formula (1), X represents a sulfur atom (S) or a sulfonyl group (SO₂), Z represents a hydrogen atom (H) or a fluorine atom (F), R and R' are identical to or different from each other, and each represent an alkyl group having 1 to 6 carbon atoms or a cycloalkyl group having 3 to 7 carbon atoms, and at least one of R and R' represents a secondary alkyl group having 3 to 7 carbon atoms.

The photochromic compound develops color by irradiation of light of a particular wavelength, for example, the ultraviolet range (e.g., from 250 nm to 400 nm). The photochromic compound of the general formula (1) develops color by light irradiation by bonding two substituents R's (herein R' represents the same as R) bonded to two thiophene rings to form a ring (ring-closing). The photochromic compound that has developed color is stable under less than a given temperature, but the developed color fades (is lost) when exposed to the condition of the given temperature or more (when heated). It is preferred for the constituent material of the temperature indicator 22 to develop a color that is in a stable state under visible light.

The time information display section 24 is an area in which time information is printed. The time information is, for example, a bar code, a two-dimensional code, or text information. The time information indicates a time at which the use of the temperature display device 20 is started. When the time information display section 24 displays a bar code, a two-dimensional code, or the like, the displayed information may include information about the object to which the temperature display device 20 is attached. The information about the object is, for example, a product name or identification information for identifying the object. Shapes and sizes suitable for the specifications, size, usage, and the like of a target product to which, as a target of temperature detection, the temperature display device 20 is assumed to be attached are selected for the temperature indicator 22 and the time information display section 24, which are placed in the temperature display device 20.

An example of color fading characteristics in the temperature indicator 22 is described. FIG. 2 is a graph for showing an example of color fading characteristics of the temperature indicator 22 in the first embodiment. The axis of ordinate in FIG. 2 indicates the chroma of the color of the temperature indicator 22 (see FIG. 1), and a higher chroma equals a deeper color. The axis of abscissa indicates the elapsed time. The color of the temperature indicator 22, after being developed by the irradiation of light of a particular wavelength, fades (is lost) with time as shown in FIG. 2. In FIG. 2, a change with time of the color at a first temperature is denoted by a reference symbol "a". A change with time of the color at a second temperature, which is higher than the first temperature, is denoted by a reference symbol "b". A change with time of the color at a third temperature, which is higher than the second temperature, is denoted by a reference symbol "c". The color of the temperature indicator 22 thus fades (is lost) at a higher rate when the temperature is higher. The chroma of the color has a value based on the temperature, and the temperature of an environment in which the temperature display device 20 is put can accordingly be found out based on the chroma of the color.

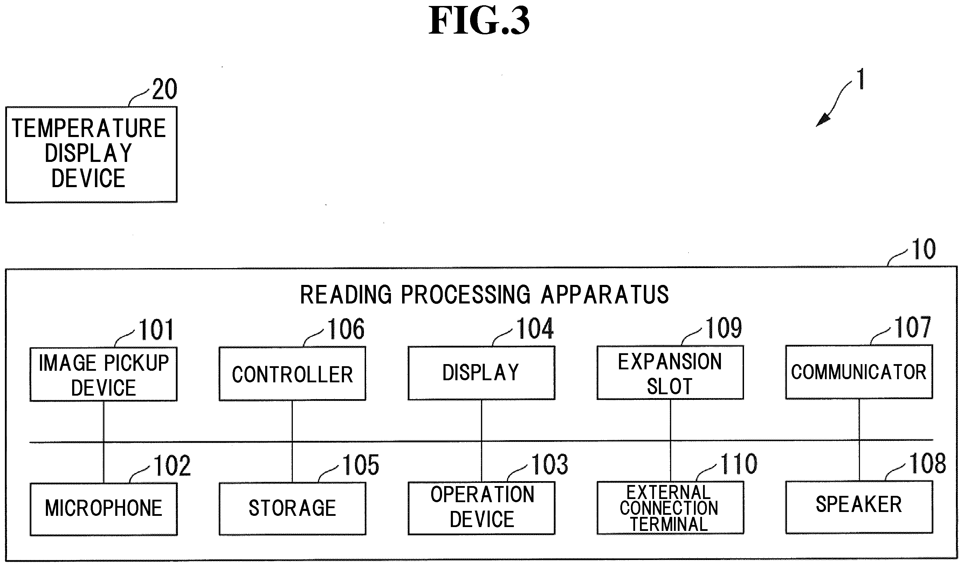

A description given next is on a configuration example of a reading processing system 1 for a temperature display device, which reads information of the temperature display device 20 and processes the information. FIG. 3 is a block diagram for illustrating a configuration example of the reading processing system 1 for a temperature display device according to the first embodiment. As illustrated in FIG. 3, the reading processing system 1 for a temperature display device includes a reading processing apparatus 10 for a temperature display device (hereinafter simply referred to as "reading processing apparatus 10") and the temperature display device 20.

The reading processing apparatus 10 includes, as illustrated in FIG. 3, an image pickup device 101 (an obtaining device), a microphone 102, an operation device 103, a display 104, a storage 105, a controller 106 (a temperature estimator), a communicator 107, a speaker 108, an expansion slot 109, and an external connection terminal 110. The image pickup device 101, the microphone 102, the operation device 103, the display 104, the storage 105, the controller 106, the communicator 107, the speaker 108, the expansion slot 109, and the external connection terminal 110 are connected to one another via a bus, for example.

The reading processing apparatus 10 reads information of the temperature display device 20, and performs calculation from the read information to obtain, among others, the ambient temperature of the object to which the temperature display device is attached and the elapsed time. The reading processing apparatus 10 displays the obtained ambient temperature of the object and the obtained elapsed time on the display 104. The reading processing apparatus 10 is an apparatus having an image pickup function, for example, a smart phone, a tablet terminal, or a dedicated apparatus.

The image pickup device 101 is a camera using, for example, a complementary MOS (CMOS) image sensor or a charge-coupled device (CCD) image sensor. The image pickup device 101 picks up, under control of the controller 106, an image including the temperature indicator 22 (see FIG. 1) and time information display section 24 (see FIG. 1) of the temperature display device 20 (see FIG. 1). The image pickup device 101 outputs image data of the picked up image to the controller 106 via the bus. The image data of the picked up image contains a time at which the image is picked up. The image pickup time is, for example, a time measured by the controller 106 or a time obtained via the communicator 107 over a network (not shown).

The microphone 102 picks up an acoustic signal under control of the controller 106, and outputs the picked up acoustic signal to the controller 106 via the bus.

The operation device 103 is a mechanical button, a touch panel sensor provided on the display 104, or the like. The operation device 103 detects the result of operation performed by a user, and outputs the detected operation result to the controller 106 via the bus.

The display 104 is a device on which information is displayed. The display 104 is constructed from, for example, a liquid crystal display (LCD), an organic electroluminescence (EL) apparatus, or an electronic paper apparatus. The display 104 displays, under control of the controller 106, an image or the like based on the result of picking up an image of the temperature display device 20.

The storage 105 stores, among others, information required for the control of the reading processing apparatus 10, a program, information for identifying the color information, the relation between the elapsed time, color fading, and the temperature, and information indicating a given temperature range.

The controller 106 controls the image pickup device 101 so that an image including the temperature indicator 22 and time information display section 24 of the temperature display device 20 is picked up based on the result of operation performed by the user on the operation device 103. The controller 106 recognizes the color information of the temperature indicator 22 included in the picked up image. The controller 106 extracts the time information included in the picked up image. The controller 106 uses the extracted time information and the time at which the image is picked up to obtain the elapsed time. The controller 106 estimates the ambient temperature of the object to which the temperature display device 20 is attached from the recognized color, from the elapsed time, and from the relation between the elapsed time, color fading, and the temperature stored in the storage 105. The controller 106 displays information indicating the estimated time and information indicating the elapsed time on the display 104. The controller 106 determines whether the range of the ambient temperature of the object is within a given temperature range. The controller 106 displays the result of the determination on the display 104. When a flash memory, for example, is inserted to the expansion slot 109, the controller 106 performs control so that information is read out of or written to the flash memory. When an external instrument, for example, is connected to the external connection terminal 110, the controller 106 performs control to obtain information from the connected external instrument, control to output information to the external instrument, or other types of control. Detailed processing executed by the controller 106 is described later.

The communicator 107 holds communication to and from, for example, a server apparatus, over a network under control of the controller 106.

The speaker 108 outputs an acoustic signal under control of the controller 106.

The expansion slot 109 is a slot to which a flash memory, for example, is inserted.

The external connection terminal 110 is, for example, a universal serial bus (USB) terminal.

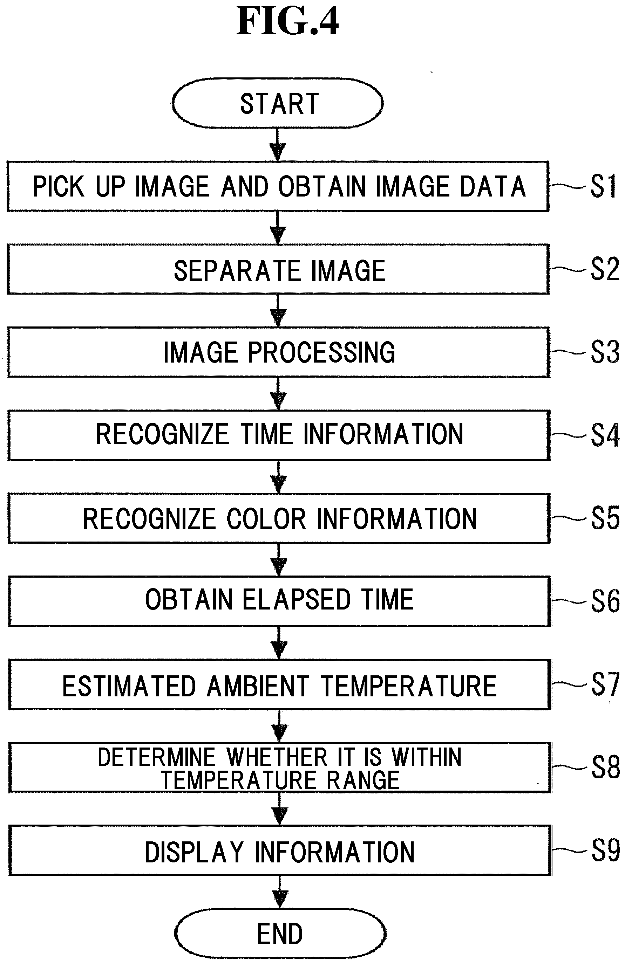

An example of steps of reading information of the temperature display device 20 and processing the information is described next. FIG. 4 is a flow chart for illustrating an example of steps of reading information of the temperature display device 20 and processing the information in the first embodiment.
(Step S1) The image pickup device 101 picks up, under control of the controller 106, an image including the temperature indicator 22 (see FIG. 1) and time information display section 24 (see FIG. 1) of the temperature display device 20 (see FIG. 1). The controller 106 subsequently obtains image data of the image picked up by the image pickup device 101, and information indicating a time at which the image is picked up.
(Step S2) The controller 106 separates an image of the area of the temperature indicator 22 and an image of the area of the time information display section 24, which are included in the obtained image data. The controller 106 performs, for example, clustering processing on the obtained image data to separate the image of the area of the temperature indicator 22 and the image of the area of the time information display section 24, and extracts the separated images.
(Step S3) The controller 106 extracts a feature amount from each of the extracted image of the area of the temperature indicator 22 and the extracted image of the area of the time information display section 24.
(Step S4) The controller 106 recognizes the time information based on the feature amount extracted from the image of the area of the time information display section 24 and on information stored in the storage 105. When the time information display section 24 displays a two-dimensional code, for example, the controller 106 recognizes time information embedded in the two-dimensional code and indicating a time at which the use of the temperature display device 20 is started by pattern matching or other methods.
(Step S5) The controller 106 recognizes information indicating a color (hereinafter referred to as "color information") based on the feature amount extracted from the image of the area of the temperature indicator 22 and on information stored in the storage. The controller 106 recognizes the color information of the temperature indicator 22 by, for example, pattern matching.
(Step S6) The controller 106 uses the time information recognized in Step S4 and the information indicating the time at which the image is picked up by the image pickup device 101 to obtain the length of time elapsed since the time at which the use of the temperature display device 20 is started till the time at which the image is picked up. The controller 106 subsequently stores information indicating the obtained elapsed time in the storage 105.
(Step S7) The controller 106 uses the elapsed time obtained in Step S6, the color information recognized in Step S5, and the relation between the elapsed time, color fading, and the temperature stored in the storage 105 to estimate an ambient temperature. The controller 106 subsequently stores information indicating the estimated ambient temperature in the storage 105. The ambient temperature is the temperature of an environment to which an object that is a target of temperature detection has been exposed.
(Step S8) The controller 106 determines whether the temperature estimated in Step S8 is within a predetermined temperature range, and proceeds to Step S9.
(Step S9) The controller 106 performs control so that the information indicating the estimated ambient temperature, the information indicating the elapsed time, and information indicating whether the estimated temperature is within the predetermined temperature range are displayed on the display 104. The controller 106 may perform control so that information displayed on the display 104 is the information indicating the estimated ambient temperature and the information indicating the elapsed time.

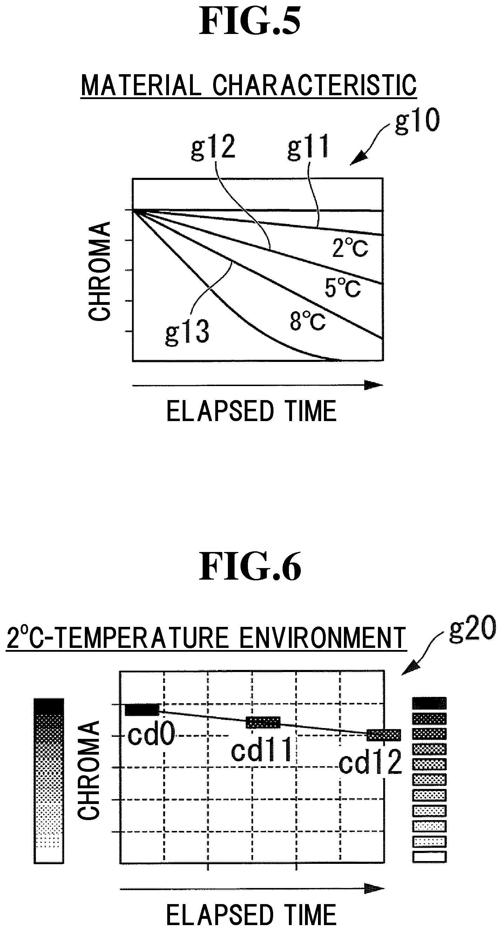

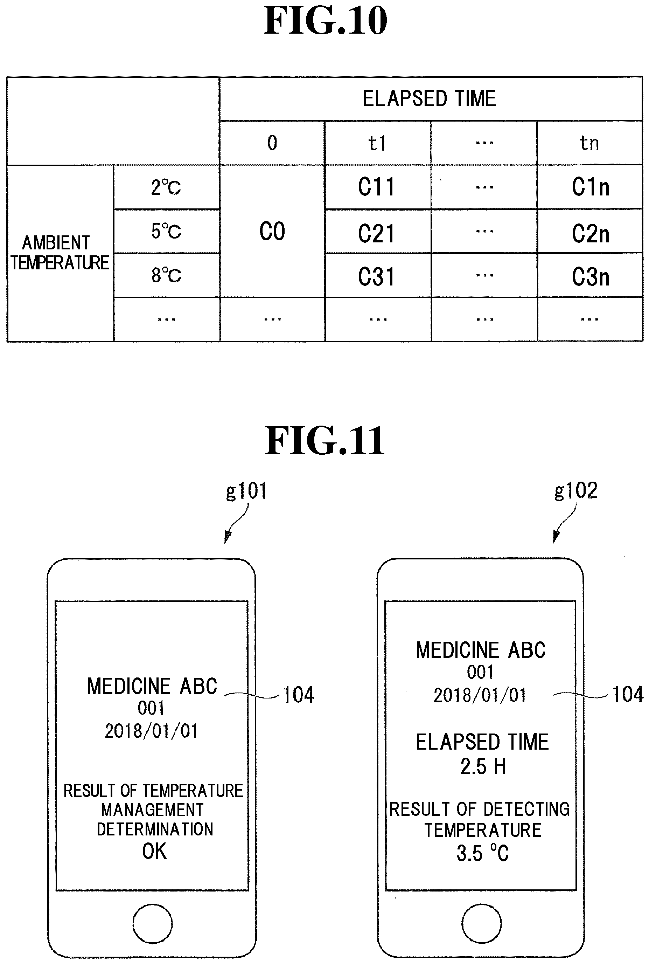

An example of how the temperature indicator 22 behaves in relation to temperature and time is described next with reference to FIG. 5 to FIG. 10. FIG. 5 to FIG. 9 are diagrams for showing and illustrating an example of how the temperature indicator 22 behaves in relation to temperature and time in the first embodiment. FIG. 10 is a table for showing an example of the relation between the elapsed time, color fading, and the temperature (the color fading information) stored in the storage 105 in the first embodiment.

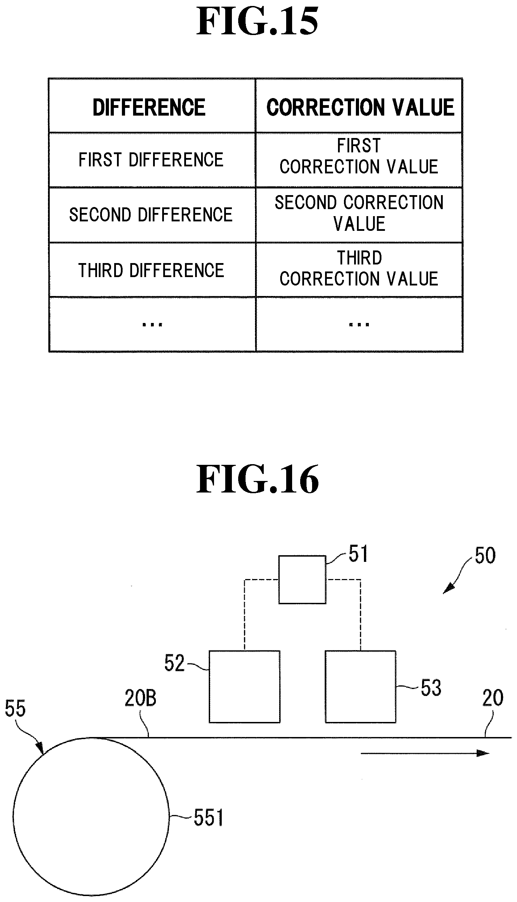

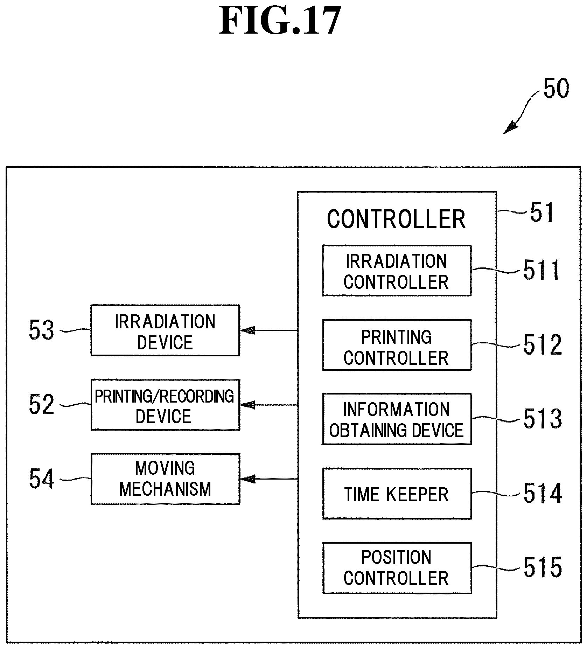

When an object to which the temperature display device 20 is attached is put in an environment having a given temperature, an issuing apparatus 50 (see FIG. 16 and FIG. 17) forms the temperature display device 20, which includes the temperature indicator 22 (see FIG. 1) and the time information display section 24 (see FIG. 1), on the base sheet 21 (see FIG. 1) as described later. The issuing apparatus 50 then irradiates the temperature indicator 22 with, for example, light in the ultraviolet range (e.g., 250 nm to 400 nm). This starts temperature monitoring by the temperature indicator 22. In the following description, the color information at the start time, which is 0 in elapsed time, is a color C0 as shown in FIG. 10.

FIG. 5 is a graph for showing an example of a relation between the chroma of the color of the temperature indicator 22 and the elapsed time. The axis of ordinate indicates the chroma of the color and the axis of abscissa indicates the elapsed time. The relation of the chroma of the color to the elapsed time observed when the ambient temperature is 2°C is denoted by a reference symbol g11. The relation of the chroma of the color to the elapsed time observed when the ambient temperature is 5°C is denoted by a reference symbol g12. The relation of the chroma of the color to the elapsed time observed when the ambient temperature is 8°C is denoted by a reference symbol g13. The color fading characteristics shown in FIG. 5 can be changed by changing the structure of the temperature indicator 22 so as to suit required specifications.

FIG. 6 is a graph for showing an image of a relation between the elapsed time and the chroma of a color that is observed when an object to which the temperature display device 20 is attached is exposed to a 2°C-temperature environment. The axis of ordinate indicates the chroma of the color and the axis of abscissa indicates the elapsed time. In the example shown in FIG. 6, the relation is denoted by a reference symbol g20, and the chroma of the color changes with time from cd0 to cd11, and from cd11 to cd12.

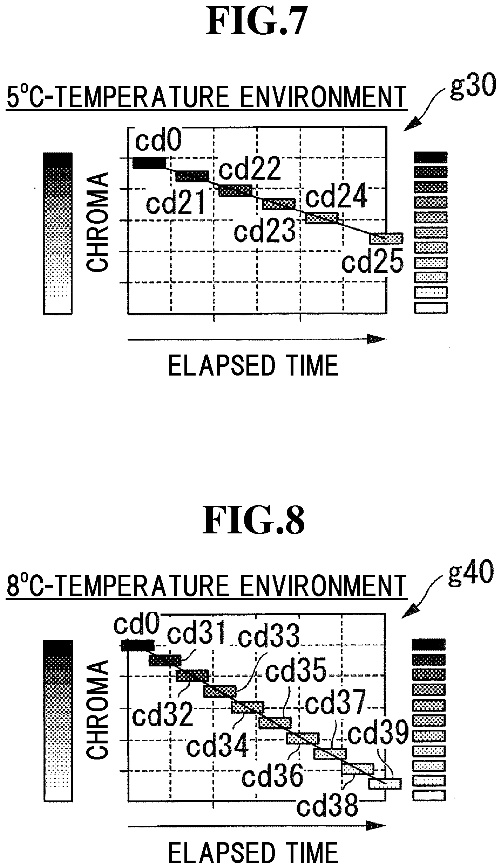

FIG. 7 is a graph for showing an image of a relation between the elapsed time and the chroma of a color that is observed when an object to which the temperature display device 20 is attached is exposed to a 5°C-temperature environment. The axis of ordinate indicates the chroma of the color and the axis of abscissa indicates the elapsed time. In the example shown in FIG. 7, the relation is denoted by a reference symbol g30, and the chroma of the color changes with time from cd0 to cd21, cd22, cd23, cd24, and cd25 in the order stated.

FIG. 8 is a graph for showing an image of a relation between the elapsed time and the chroma of a color that is observed when an object to which the temperature display device 20 is attached is exposed to an 8°C-temperature environment. The axis of ordinate indicates the chroma of the color and the axis of abscissa indicates the elapsed time. In the example shown in FIG. 8, the relation is denoted by a reference symbol g40, and the chroma of the color changes with time from cd0 to cd31, cd32, cd33, cd34, cd35, cd36, cd37, cd38, and cd39 in the order stated.

The rate at which the chroma of the color drops, namely, the rate of color fading, varies depending on the ambient temperature as shown in FIG. 5 to FIG. 8. In the examples shown in FIG. 5 to FIG. 8, the rate of color fading is highest in the 8°C environment, and lowest in the 2°C environment. A change in the color of the temperature indicator 22 due to a change in temperature and the fading of the color of the temperature indicator 22 with time are irreversible. For instance, when the object is removed from a 2°C environment and exposed to a 15°C environment, the color information changes to that of 15°C and does not return to the color information of 2°C even if the object is put back to the 2°C environment.

Because of this relation, in the first embodiment, color information is recorded for each ambient temperature in association with an elapsed time in the storage 105 as the relation between the elapsed time, color fading, and the temperature (the color fading information) as shown in FIG. 10. When the ambient temperature is 2°C, for example, the color information at an elapsed time "0" is the color C0, the color information at an elapsed time t1 is a color C11, and the color information at an elapsed time tn is a color C1n. When the ambient temperature is 8°C, the color information at the elapsed time "0" is the color C0, the color information at the elapsed time t1 is a color C31, and the color information at the elapsed time tn is a color C3n. The color information (C0, C11, ... C3n) can be expressed as a color in any one of the RGB color space, the sRGB color space, the CMY color space, the HSV color space, and other color spaces.

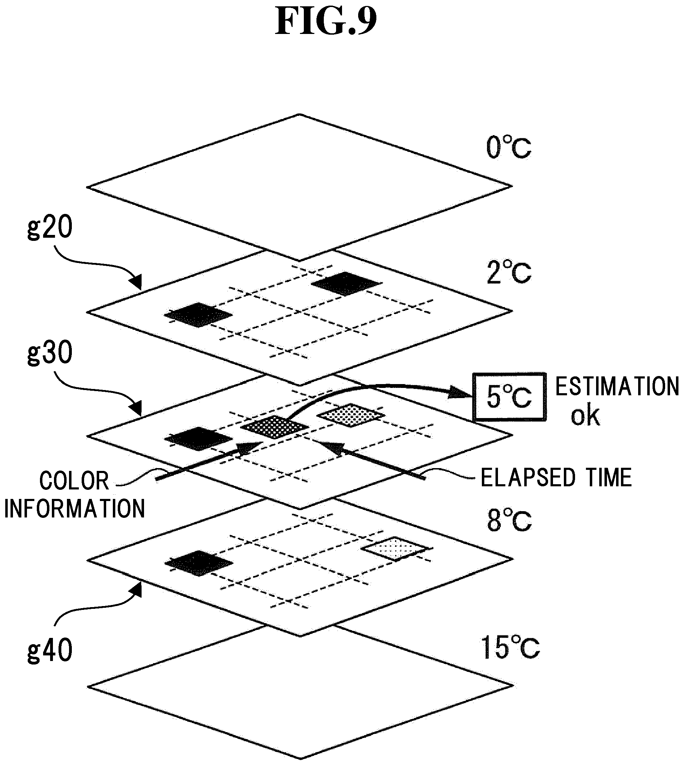

FIG. 9 is a diagram for illustrating an image of estimating (identifying) the ambient temperature from the obtained elapsed time and from the recognized color information. The controller 106 recognizes the color information of the temperature indicator 22 by executing image recognition. The controller 106 obtains the length of time elapsed since the time at which the use of the temperature display device 20 is started till the time at which the image is picked up, and estimates the ambient temperature from the obtained elapsed time and the recognized color information. For instance, when the recognized color information is C21 and the elapsed time is t1, the ambient temperature is estimated to be 5°C from the relation between the elapsed time, color fading, and the temperature (the color fading information) stored in the storage 105.

The material of the temperature indicator 22 on the temperature display device 20 in the first embodiment, which detects a temperature change inducing a change in its color, thus changes its color in a manner dependent on the ambient temperature as shown in FIG. 2 and FIG. 5. According to the first embodiment, the temperature can be identified uniquely by checking the elapsed time and the changed color information because of the relation shown in FIG. 5. To identify the temperature, the controller 106 recognizes the color information of the temperature indicator 22 and obtains the elapsed time as described above. The controller 106 then uniquely identifies a temperature associated with the obtained elapsed time and the recognized color information by referring to the color fading information stored in the storage 105.

The temperature detection range of the temperature indicator 22 is 2°C to 8°C in the examples shown and illustrated in FIG. 5 to FIG. 10. The color of the temperature indicator 22 changes to white when the ambient temperature of an object to which the temperature display device 20 is attached is 20°C, which is higher than the temperature detection range. When the given temperature range is 2°C to 8°C and the ambient temperature of the object is 15°C, for example, the controller 106 can determine that the ambient temperature of the object is outside the given temperature range from the recognized color information. The controller 106 can determine that the ambient temperature of the object is outside the given temperature range also when the ambient temperature of the object is 20°C, which is higher than the temperature detection range, from the fact that the recognized color information is white.

The relation between the elapsed time, color fading, and the temperature (the color fading information) stored in the storage 105 and shown in FIG. 10 is stored in the storage 105 by measuring color information for each temperature and for each elapsed time in advance. Alternatively, a relation between the elapsed time, color fading, and the temperature (color fading information) specific to the temperature indicator 22 to be used is obtained in advance by measurement, and the controller 106 may obtain this color fading information via one of the communicator 107, the expansion slot 109, and the external connection terminal 110 to store the color fading information in the storage 105. Another option is to create a relation between the elapsed time, color fading, and the temperature (color fading information) with the use of a given relational expression (for example, a numerical expression of the half-value period of color fading), and store the created relation in the storage 105. The relation between the elapsed time, color fading, and the temperature (the color fading information) stored in the storage 105 may be in the form of the given relational expression described above or an approximate expression instead of a data table.

The information stored in the storage 105 to identify color information is described. When the color information is expressed as a color in a color space where R, G, and B each have 256 values, image data of 1,6770,000 colors is required as comparison data to recognize the color information. However, when the temperature at which an object is stored is in a limited range as described above, the color information of the temperature indicator 22 changes in a limited range as well. Consequently, the information stored in the storage 105 to recognize the color information requires only image data associated with temperatures in this temperature range, and the amount of data to be stored is accordingly reduced. It is thus possible to reduce the amount of image data to be stored in the storage 105 to recognize the color information, to thereby be able to lighten the load of pattern matching processing executed by the controller 106 to recognize the color information.

To give an example, in color information recognition conducted without image data on the long wavelength side of 590 nm in the visible light wavelength range when the temperature display device 20 developed a color containing a violet color component and faded to a color containing a blue color component, quick temperature identification was accomplished at a reduced data amount. A reduction in the amount of image data to be processed and in processing load was also accomplished in this case by converting the obtained image data into monochromatic image data.

While the controller 106 identifies the color information of the temperature indicator 22 in the example described above, the present invention is not limited thereto. As described above, when the temperature at which an object is stored is in a limited range, the color information of the temperature indicator 22 changes in a limited range as well. It is assumed as an example that a ray of light having a wavelength of 450 nm causes the temperature indicator 22 to develop a color and the color information at the elapsed time "0" is blue. The color information may change in a range between blue violet and blue, for example, depending on use and temperature. In such cases, the controller 106 may convert image data of a picked up image into, for example, grayscale image data in Step S3 of FIG. 4 to recognize the color information from the shades of the grayscale image data. The controller 106 may obtain a density difference between a density value in grayscale stored in the storage 105 as a value observed at the time of issuance of the temperature indicator 22 and a density value in grayscale of the image data of the picked up image. The controller 106 may estimate the temperature at which the object has been stored based on the obtained density difference, the elapsed time, and a relation between the elapsed time, the density difference, and the temperature (color fading information) stored in the storage 105. The storage 105 in this case may store information for recognizing the color information of the temperature indicator 22 based on color information that has been converted into grayscale information, a density value in grayscale observed at the time of issuance of the temperature indicator 22, and the relation between the elapsed time, the density difference, and the temperature (the color fading information).

An example of information displayed on the display 104 is described. FIG. 11 is a diagram for illustrating an example of information displayed on the display 104 of the reading processing apparatus 10 according to the first embodiment. Area images denoted by reference symbols g101 and g102 are an example of images displayed on the display 104. In the area image denoted by the reference symbol g101, "Medicine ABC 001", "2018/01/01 (January 1, 2018)", and "OK" or another type of information indicating that the object has been stored within a given temperature range are displayed on the display 104 as product information, a determination date, and the result of temperature management determination, respectively.

In the area image denoted by the reference symbol g102, "Medicine ABC 001", "2018/01/01 (January 1, 2018)", "2.5 h (2.5 hours)", and "3.5°C" are displayed on the display 104 as product information, a determination date, the elapsed time, and the result of detecting a temperature at which the object has been stored (a temperature detection result), respectively.

The displayed information illustrated in FIG. 11 is an example, and information that can be displayed is not limited thereto. The display 104 may display, among others, information indicating a date/time at which the object is started to be stored.

As described above, the color of the temperature indicator 22 is recognized by the reading processing apparatus 10 for a temperature display device in the first embodiment instead of visual check. In the first embodiment, the controller 106 of the reading processing apparatus 10 for a temperature display device obtains the elapsed time from a difference between the information embedded in the temperature indicator 22 to indicate the time at which the use of the temperature indicator 22 is started and a time at which an image is picked up. The controller 106 in the first embodiment then estimates the ambient temperature of the object by checking the recognized color information and the elapsed time against the color fading information stored in the storage 105. The controller 106 in the first embodiment further determines whether the estimated temperature is within a given temperature range that is a temperature management range.

According to the first embodiment, the ambient temperature of an object and the elapsed time can thus be estimated with precision. The ambient temperature of an object and the elapsed time can be reported simultaneously on, for example, the display 104 as well according to the first embodiment. According to the first embodiment, whether the ambient temperature is within a temperature range and whether an object has been exposed to an environment having a temperature outside a temperature management range can be determined with ease and precision.

### Second Embodiment

An example in which the temperature display device 20 includes the base sheet 21, the temperature indicator 22, and the time information display section 24 as illustrated in FIG. 1 is described in the first embodiment. The present invention, however, is not limited to this example.

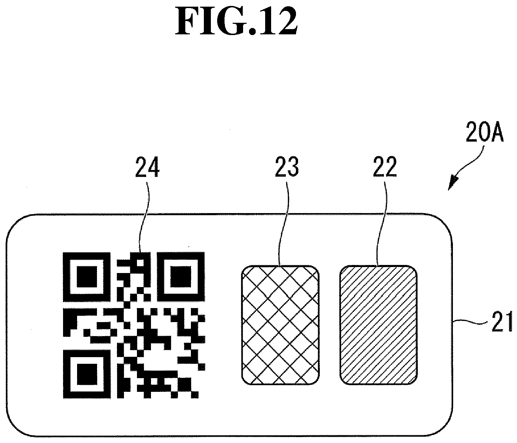

FIG. 12 is a diagram for illustrating an example of a temperature display device 20A including a calibration-use color information section 23 in a second embodiment of the present invention. As illustrated in FIG. 12, the temperature display device 20A includes the base sheet 21, the temperature indicator 22, the calibration-use color information section 23, and the time information display section 24.

The calibration-use color information section 23 is used to determine whether image data of a picked up image of the temperature indicator 22 is to be calibrated when the color information of the temperature indicator 22 is recognized. When it is determined by the controller 106 that the calibration is to be executed, the calibration-use color information section 23 is used to calibrate the color information of the temperature indicator 22.

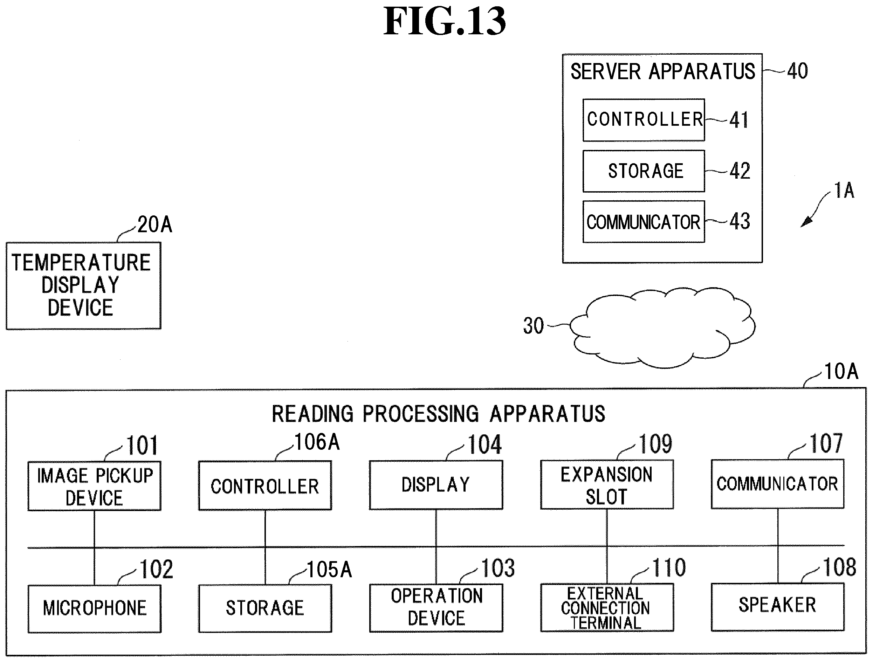

A description is given next on a configuration example of a reading processing system 1A for a temperature display device, which reads information of the temperature display device 20A and processes the information. FIG. 13 is a block diagram for illustrating a configuration example of the reading processing system 1A for a temperature display device according to the second embodiment. The reading processing system 1A for a temperature display device includes a reading processing apparatus 10A, the temperature display device 20A, and a server apparatus 40 as illustrated in FIG. 13. The reading processing apparatus 10A and the server apparatus 40 are connected to each other via a network 30.

The network 30 is a wireless communication network, for example, a wireless local area network (LAN), a communication network of the 3G communication standards (a third-generation mobile communication system), or a communication network of the 4G communication standards (a fourth-generation mobile communication system), or a cable communication network, for example, a LAN.

The server apparatus 40 includes a controller 41, a storage 42, and a communicator 43. The server apparatus 40 receives information transmitted from the reading processing apparatus 10A over the network 30. The server apparatus 40 estimates the ambient temperature of an object to which the temperature display device 20A is attached based on the received information, and transmits the result of the estimation to the reading processing apparatus 10A over the network 30. In other words, the server apparatus 40 executes image processing and other types of processing handled by the reading processing apparatus 10 in the first embodiment, and transmits the result of the processing to the reading processing apparatus 10A.

The controller 41 obtains image data of an image of the temperature display device 20A picked up by the reading processing apparatus 10A and output to the communicator 43. The image data includes a time at which the image is picked up. The controller 41 recognizes the color information of the temperature indicator 22 included in the image data. The controller 41 recognizes the color information of the calibration-use color information section 23 included in the image data. The controller 41 extracts time information included in the image data. The controller 41 uses the extracted time information and the time at which the image is picked up to obtain the elapsed time. The controller 41 calibrates (corrects) the recognized color information of the temperature indicator 22 based on the recognized color information of the calibration-use color information section 23 and information stored in the storage 42. The controller 41 estimates the ambient temperature of the object to which the temperature display device 20A is attached based on the calibrated color information, the elapsed time, and a relation between the elapsed time, color fading, and the temperature, which is stored in the storage 42. The controller 41 determines whether the ambient temperature of the object is within a given temperature range. The controller 41 outputs, among others, information indicating the ambient temperature of the object to which the temperature display device 20A is attached, information indicating the elapsed time, and the result of determining whether the ambient temperature of the object is within the given temperature range to the communicator 43.

The storage 42 stores, among others, information for identifying the color information of the temperature indicator 22, the relation between the elapsed time, color fading, and the temperature, the color information of the calibration-use color information section 23, information for calibrating (correcting) the color information of the temperature indicator 22, and information indicating the given temperature range. The information for calibrating (correcting) the color information of the temperature indicator 22 is described later.

The communicator 43 receives, under control of the controller 41, image data of the temperature display device 20A transmitted from the reading processing apparatus 10A over the network 30, and outputs the received image data of the temperature display device 20A to the controller 41. The communicator 43 transmits information output from the controller 41 to the reading processing apparatus 10A over the network 30 under control of the controller 41.

The reading processing apparatus 10A includes the image pickup device 101, the microphone 102, the operation device 103, the display 104, a storage 105A, a controller 106A, the communicator 107, the speaker 108, the expansion slot 109, and the external connection terminal 110. The image pickup device 101, the microphone 102, the operation device 103, the display 104, the storage 105A, the controller 106A, the communicator 107, the speaker 108, the expansion slot 109, and the external connection terminal 110 are connected to one another via a bus, for example. Function sections having the same functions as those in the reading processing apparatus 10 according to the first embodiment are denoted by the same reference symbols, and descriptions thereof are omitted.

The reading processing apparatus 10A reads information of the temperature display device 20A and transmits the read information to the server apparatus 40 over the network 30. The reading processing apparatus 10A receives information transmitted from the server apparatus 40 and displays the received information on the display 104. The reading processing apparatus 10A is an apparatus having an image pickup function, for example, a smart phone, a tablet terminal, or a dedicated apparatus.

The storage 105A stores, among others, information required for the control of the reading processing apparatus 10A and a program.

The controller 106A controls the image pickup device 101 so that an image including the temperature indicator 22, calibration-use color information section 23, and time information display section 24 of the temperature display device 20A is picked up based on the result of operation performed by a user on the operation device 103. The controller 106A transmits image data of the image picked up by the image pickup device 101 of the reading processing apparatus 10A by controlling the communicator 107. The controller 106A displays received information on the display 104. When a flash memory, for example, is inserted to the expansion slot 109, the controller 106A performs control so that information is read out of or written to the flash memory. When an external instrument, for example, is connected to the external connection terminal 110, the controller 106A performs control to obtain information from the connected external instrument, control to output information to the external instrument, or other types of control.

A reading processing apparatus for a temperature display device in the second embodiment (the server apparatus 40) includes an obtaining device (the communicator 43), a storage (the storage 42), and a temperature estimation device (the controller 41). The obtaining device obtains an image of the temperature display device, which includes a time information image indicating time information and a temperature information image displaying information about the temperature and the elapsed time by a change in color, and to which image pickup time information is added. The storage stores, for each temperature, color fading information, which is the relation between a color changed by a temperature change, the elapsed time, and the temperature. The temperature estimation device estimates the ambient temperature of the temperature display device based on color information about a color changed by a temperature that is detected from temperature information of the temperature information image and by the elapsed time, on the elapsed time that is calculated from the time information of the time information image, and on the color fading information stored in the storage. The same effects as those in the first embodiment can be obtained in this manner.

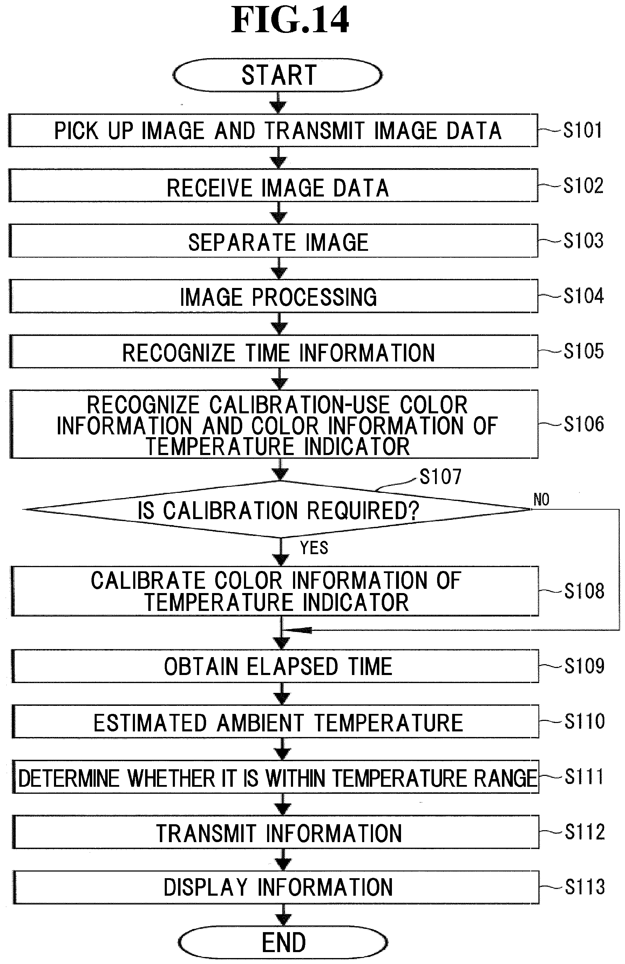

An example of processing steps executed by the reading processing system 1A for a temperature display device is described next. FIG. 14 is a flow chart for illustrating an example of processing steps executed by the reading processing system 1A for a temperature display device according to the second embodiment.
(Step S101) The image pickup device 101 of the reading processing apparatus 10A picks up, under control of the controller 106A, an image including the temperature indicator 22, calibration-use color information section 23, and time information display section 24 of the temperature display device 20A. The controller 106A subsequently transmits image data of the image picked up by the image pickup device 101 and information indicating a time at which the image is picked up to the server apparatus 40 over the network 30.
(Step S102) The controller 41 of the server apparatus 40 receives, over the network 30, via the communicator 43, the image data transmitted from the reading processing apparatus 10A.
(Step S103) The controller 41 separates an image of the area of the temperature indicator 22, an image of the area of the calibration-use color information section 23, and an image of the area of the time information display section 24, which are included in the received image data. The controller 41 performs, for example, clustering processing on the obtained image data to separate the image of the area of the temperature indicator 22, the image of the area of the calibration-use color information section 23, and the image of the area of the time information display section 24, and extracts the separated images.
(Step S104) The controller 41 extracts a feature amount from each of the extracted image of the area of the temperature indicator 22, the extracted image of the area of the calibration-use color information section 23, and the extracted image of the area of the time information display section 24.
(Step S105) The controller 41 recognizes the time information based on the feature amount extracted from the image of the area of the time information display section 24 and on information stored in the storage 42. When the time information display section 24 displays a two-dimensional code, for example, the controller 41 recognizes time information embedded in the two-dimensional code and indicating a time at which the use of the temperature display device 20A is started by pattern matching or other methods.
(Step S106) The controller 41 recognizes the color information of the temperature indicator 22 based on the feature amount extracted from the image of the area of the temperature indicator 22 and on information stored in the storage 42. The controller 41 recognizes calibration-use color information based on the feature amount extracted from the image of the area of the calibration-use color information section 23 and on information stored in the storage 42. The controller 41 recognizes the color information of the temperature indicator 22 and the calibration-use color information by, for example, pattern matching.
(Step S107) The controller 41 determines whether the color information of the temperature indicator 22 requires calibration (correction) from the result of comparison between the recognized calibration-use color information and the color information of the calibration-use color information section 23 that is stored in the storage 42. When determining that the color information of the temperature indicator 22 requires calibration (correction) (Step S107: YES), the controller 41 proceeds to Step S108. When determining that the color information of the temperature indicator 22 does not require calibration (correction) (Step S107: NO), the controller 41 proceeds to Step S109.
(Step S108) The controller 41 calibrates (corrects) the color information of the temperature indicator 22 based on the calibration-use color information. After the calibration, the controller 41 proceeds to Step S109.
(Step S109) The controller 41 uses the time information recognized in Step S105 and the information indicating the time at which the image is picked up by the image pickup device 101 of the reading processing apparatus 10A to obtain the length of time elapsed since the time at which the use of the temperature display device 20A is started till the time at which the image is picked up. The controller 41 subsequently stores information indicating the obtained elapsed time in the storage 42.
(Step S110) The controller 41 uses the elapsed time obtained in Step S109, the color information of the temperature indicator 22 recognized in Step S106 or the color information of the temperature indicator 22 calibrated in Step S108, and the relation between the elapsed time, color fading, and the temperature stored in the storage 42 to estimate an ambient temperature. The controller 41 subsequently stores information indicating the estimated ambient temperature in the storage 42.
(Step Sill) The controller 41 determines whether the temperature estimated in Step S110 is within a predetermined temperature range. After the determination, the controller 41 proceeds to Step S112.
(Step S112) The controller 41 controls the communicator 43 to transmit, to the reading processing apparatus 10A over the network 30, information indicating the estimated ambient temperature, information indicating the elapsed time, and information indicating whether the estimated temperature is within a predetermined temperature range.
(Step S113) The controller 106A of the reading processing apparatus 10A receives the information transmitted from the server apparatus 40. The controller 106A subsequently performs control so that the received information indicating the ambient temperature, the received information indicating the elapsed time, and the received information indicating whether the estimated temperature is within a predetermined temperature range are displayed on the display 104. The controller 106A may perform control so that the information indicating the ambient temperature and the information indicating the elapsed time are displayed on the display 104.

The calibration processing executed by the server apparatus 40 is described next. The color information of the temperature indicator 22 may not be recognized properly in some environments in which the reading processing apparatus 10A picks up an image of the temperature indicator 22 with the use of the image pickup device 101. Factors preventing proper recognition of the color information are given below:
(I) the (indoor or outdoor) environment in which the image is picked up;
(II) when the image is picked up indoors, the type of a light source used indoors (fluorescent light, light emitting diode (LED), incandescent lamp, halogen light, or the like);
(III) when the image is picked up outdoors, the time of day, the season, or the like in which the image is picked up; and
(IV) others (a difference in the color difference of the temperature indicator 22, the influence of an optical system or image processing section of the image pickup device 101, the influence of an exposure condition at the time of photographing, and the like).

The factors given above are an example, and the cause of improper recognition is not limited thereto.

The storage 42 of the server apparatus 40 stores the color information of the calibration-use color information section 23 as described above. The controller 41 compares the recognized calibration-use color information and the color information of the calibration-use color information section 23 that is stored in the storage 42, and determines that calibration is required when it is found out as a result of the comparison that the difference between the two pieces of color information, or the ratio of the two pieces of color information, is equal to or more than a given value. Meanwhile, the controller 41 determines that calibration is not required when it is found out as a result of the comparison that the difference between the two pieces of color information, or the ratio of the two pieces of color information, is less than the given value. When determining that the calibration is required, the controller 41 uses correction coefficient information stored in the storage 42 to calibrate (correct) the color information of the temperature indicator 22.

An example of the correction coefficient information stored in the storage 42 is described next. FIG. 15 is a table for showing an example of the correction coefficient information, which is stored in the storage 42 of the server apparatus 40 according to the second embodiment. In the example shown in FIG. 15, the storage 42 stores each magnitude of difference between the calibration-use color information and the color information of the calibration-use color information section 23 in association with a correction value in a table format. For example, a second difference is larger than a first difference, and a third difference is larger than the second difference. A second correction value is larger than a first correction value, and a third correction value is larger than the second correction value.

The determination about whether to perform the calibration and the calibration processing may be executed by the controller 106 of the reading processing apparatus 10, which is described in the first embodiment. The correction coefficient information in this case may be stored in the storage 105. Thus, calibration may also be carried out in the first embodiment.

As described above, the reading processing apparatus 10A for a temperature display device picks up an image and the color of the temperature indicator 22 is recognized by the server apparatus 40 instead of visual check in the second embodiment.

In the second embodiment, the controller 41 of the server apparatus 40 obtains the elapsed time based on a difference between the information embedded in the temperature indicator 22 and indicating the time at which the use of the temperature display device is started and the time at which the image is picked up. The controller 41 in the second embodiment estimates the ambient temperature of an object by checking the recognized color information and the elapsed time against the color fading information stored in the storage 42. The controller 41 in the second embodiment further determines whether the estimated temperature is within a given temperature range that is a temperature management range.

According to the second embodiment, the ambient temperature of an object and the elapsed time can thus be estimated with precision, and the result of the estimation can be transmitted to the reading processing apparatus 10A for a temperature display device. The ambient temperature of an object and the elapsed time can be reported simultaneously on, for example, the display 104 of the reading processing apparatus 10A for a temperature display device as well according to the second embodiment. According to the second embodiment, whether the ambient temperature is within a temperature range and whether an object has been exposed to an environment having a temperature outside a temperature management range can be determined with ease and precision.

### <Temperature Display Device Issuing Apparatus>

The issuing apparatus 50, which issues the temperature display device 20 or the temperature display device 20A, is described next. The following description takes as an example a case in which the temperature display device 20 is issued. FIG. 16 is a schematic diagram for illustrating the issuing apparatus 50 with which the temperature display device 20 is issued in the embodiments. FIG. 17 is a block diagram for illustrating a configuration example of the issuing apparatus 50 in the embodiments.

As illustrated in FIG. 16 and FIG. 17, the issuing apparatus 50 includes a base feeder 55, a printing/recording device 52, an irradiation device 53, a moving mechanism 54, and a controller 51.

The base feeder 55 includes, for example, a roll 551 (e.g., a roll of paper) around which a long temperature display device 20B is wound. The temperature display device 20B is a form of a temperature display device (for example, the temperature display device 20 of FIG. 1) prior to cutting, and is made up of a chain of a plurality of temperature display devices. The base feeder 55 may alternatively employ a method in which temperature display devices cut into a given size in advance are fed (a sheet-fed method).

The printing/recording device 52 can employ various printing/recording methods, for example, a thermal recording method, which uses a thermal head, an ink ribbon method, an ink jet method, an electrophotographic method, and a laser marking method (a method in which a surface is treated by irradiating the surface with laser light). A thermal printer using a thermal recording method is particularly preferred. Features of a thermal printer include a very small running noise, and a relatively simple structure suitable for size and weight reduction, which helps to keep the cost low. Another advantage of a thermal printer, which does not use an ink ribbon, an ink cartridge, or any other type of ink, and requires only heat-sensitive paper as a consumable supply, is simple and easy handling and low running cost.

The printing/recording device 52 prints display information (for example, the time information display section 24 in the temperature display device 20 of FIG. 1) on the temperature display device 20B.

The irradiation device 53 includes a light source of irradiation light to be irradiated onto a temperature indicator (for example, the temperature indicator 22 of FIG. 1). The wavelength of irradiation light irradiated by the irradiation device 53 is in, for example, the ultraviolet range (e.g., from 250 nm to 400 nm). A wide range of ultraviolet rays from a short-wavelength ray used for sterilization and other purposes to a long-wavelength ray close to the visible light range can cause a temperature indicator (for example, the temperature indicator 22 of FIG. 1) to develop color. However, the selection of the wavelength of irradiation light to be used is desirably based on the absorption spectra of an open-ring body and closed-ring body of a photochromic compound. The light source can be of LED type, lamp type, or other types. The light source can be selected based on the specifications of the temperature display device (for example, the temperature display device 20 of FIG. 1) and the specifications of the issuing apparatus 50. An ultraviolet LED is favorably used as the light source when the issuing apparatus 50 is small in size. Ultraviolet LEDs have a narrow wavelength range, and it is therefore preferred to select a wavelength from the absorption spectrum of a photochromic compound used in the temperature indicator section of the temperature display device, and select an ultraviolet LED capable of irradiating light of the selected wavelength. When a light source having a wide wavelength range as in the lamp type is used, color development characteristics of irradiation light can be adjusted with a filter in accordance with the absorption spectrum of the temperature indicator section. The light source is provided inside a casing (not shown) of the issuing apparatus 50, for example. It is preferred to prevent light irradiated by the light source from leaking to the outside of the issuing apparatus 50. A preferred position of the light source is on the side downstream of the printing/recording device 52 (the downstream side in a direction in which the temperature display device is conveyed out) and close to an exit of the issuing apparatus 50 (an outlet from which the temperature display device is conveyed out). This is because, with the temperature indicator section of the temperature display device starting temperature detection by light irradiation, the temperature display device can be attached to a target product shortly after the start of temperature detection when the light source is positioned close to the exit of the issuing apparatus 50.

The moving mechanism 54 rolls out the long temperature display device 20B from the roll 551 with the use of a motor or a similar drive device (not shown) to send the temperature display device out via the printing/recording device 52 and the irradiation device 53. A temperature display device (for example, the temperature display device 20 of FIG. 1) is issued in this manner.

The controller 51 includes, for example, a central processing unit (CPU), a read-only memory (ROM), and a random access memory (RAM), which are connected to one another. The controller 51 executes, for example, a pre-stored program with the use of the CPU.

As illustrated in FIG. 17, the controller 51 includes an irradiation controller 511, a printing controller 512, an information obtaining device 513, a time keeper 514, and a position controller 515.

The irradiation controller 511 controls the irradiation of light by the irradiation device 53 onto the temperature display device. The printing controller 512 controls the printing of display information on the temperature display device by the printing/recording device 52. The display information is, for example, time information indicating a time at which temperature detection of the temperature display device is started, and commercial product information.

The information obtaining device 513 obtains time information and commercial product information. The time keeper 514 measures an irradiation time at which the temperature indicator is irradiated with light by the irradiation device 53, and outputs time information (the irradiation time). With this configuration, an accurate time can be printed on the temperature display device 20B.

The position controller 515 controls, for example, the conveyance of the temperature display device 20B fed from the base feeder 55. The position controller 515 outputs a control signal to the irradiation controller 511 and the printing controller 512 at timing based on the position of the temperature display device 20B, to thereby put the printing/recording device 52 and the irradiation device 53 into operation.

A method of issuing a temperature display device is described by taking as an example a case in which the temperature display device 20 of FIG. 1 is issued with the use of the issuing apparatus 50 of FIG. 16 and FIG. 17. As illustrated in FIG. 16, the temperature display device 20B is sent out from the base feeder 55. The printing/recording device 52 encodes the time information and prints the encoded time information on the time information display section 24 (see FIG. 1). The time information indicates, for example, a temperature detection start time obtained based on the time information (irradiation time) that is output from the time keeper 514 (see FIG. 17).

The irradiation device 53 irradiates light onto the temperature indicator 22. The light irradiation causes the temperature indicator 22 of the temperature display device 20B to start temperature detection. After being processed in the irradiation device 53, the temperature display device 20B is cut by a cutting device (not shown) into pieces, each of which is conveyed out of the issuing apparatus 50 as the temperature display device 20. The temperature display device 20 is issued in this manner. The temperature display device 20 is attached to a product whose temperature is to be detected.

The irradiation device 53 in the issuing apparatus 50 is on the downstream side of the printing/recording device 52 in a conveyance direction in which the temperature display device 20B is conveyed. When the printing/recording device 52 of the heat-sensitive recording type is used, the temperature display device 20B is heated during printing, but temperature detection is not started at the time of printing because the printing/recording device 52 is on the upstream side of the irradiation device 53 in the conveyance direction. The heating during printing accordingly does not affect the temperature history. An accurate temperature history can be displayed as a result.

All or some of the processing procedures executed by the reading processing apparatus 10 (or 10A) may be conducted by recording a program that implements all or some of the functions of the reading processing apparatus 10 (or 10A) according to the embodiments of the present invention on a computer-readable recording medium, causing a computer system to read the program recorded on the recording medium, and executing the program. The term "computer system" here encompasses OSs as well as peripheral equipment and other types of hardware. The term "computer system" also encompasses WWW systems in which a web site providing environment (or a web site displaying environment) is included. The "computer-readable recording medium" refers to a flexible disk, a magneto-optical disc, a ROM, a CD-ROM, or a similar portable medium, or a storage apparatus built in a computer system, for example, a hard disk drive. The term "computer-readable recording medium" also encompasses what holds a program for a given period of time, such as a volatile memory (RAM) inside a computer system that serves as a server or a client when a program is transmitted over the Internet or a similar network or via a telephone line or a similar communication line.

The program described above may be transmitted from a computer system in which the program is stored in a storage apparatus or the like to another computer system via a transmission medium or on transmission waves in a transmission medium. The "transmission medium" through which the program is transmitted refers to a medium having a function of transmitting information, such as the Internet or a similar network (a communication network), or a telephone line or a similar communication line (a communication wire). The program described above may be a program that implements some of the functions described above. The functions described above may be implemented by what is called a differential file (a differential program), which is used in combination with a program already recorded in the computer system.

This concludes the descriptions of the embodiments as modes of carrying out the present invention. However, the present invention is not limited to the embodiments in any way, and various modifications and substitutions can be made within the scope that does not depart from the present invention.

## Claims

1. A reading processing apparatus (10) for a temperature display device (20), comprising:
an obtaining device (101) configured to obtain an image of the temperature display device (20), which includes a time information image indicating time information and a temperature information image displaying information about a temperature and an elapsed time by a change in color, and to which image pickup time information is added;
a storage (105) configured to store, for each temperature, color fading information, which indicates a relation between a color changed by a temperature change, an elapsed time, and a temperature; and
a temperature estimation device (106) configured to estimate an ambient temperature of the temperature display device (20) based on color information about a color changed by a temperature that is detected from temperature information of the temperature information image and by the elapsed time, on an elapsed time that is calculated from the time information of the time information image, and on the color fading information stored in the storage (105).

2. A reading processing apparatus (10) for a temperature display device (20) according to claim 1, wherein the temperature estimation device (106) is configured to estimate the ambient temperature of the temperature display device (20) while limiting wavelength components in the temperature information image.

3. A reading processing apparatus (10) for a temperature display device (20) according to claim 1 or claim 2, wherein the temperature estimation device (106) is configured to convert the temperature information image into a grayscale image, and estimate the ambient temperature of the temperature display device (20) based on shades of the grayscale image.

4. A reading processing apparatus (10) for a temperature display device (20) according to any one of the preceding claims,
wherein the temperature display device (20) includes:
an area containing the time information, which indicates a time of issuance of the temperature display device (20); and
an area in which a temperature change is detected and the temperature information is displayed by a change in color, and
wherein the area displaying the temperature information changes color with the elapsed time.

5. A reading processing apparatus (10) for a temperature display device (20) according to claim 4,
wherein the temperature display device (20A) includes a calibration-use area (23) for calibration of information about a color,
wherein the storage (105) is configured to store information about a color of the calibration-use area and a calibration threshold for determining whether calibration is to be executed,
wherein the obtaining device (101) is configured to obtain an image of the calibration-use area, and
wherein the temperature estimation device (106) is configured to compare information about a color detected from the obtained image of the calibration-use area and the information about the color of the calibration-use area stored in the storage (105), compare a result of the comparison to the calibration threshold stored in the storage (105), and determine, from a result of the comparison, whether the color information detected from the temperature information image is to be calibrated.

6. A server apparatus (40), comprising:
a communicator (41) configured to obtain an image of a temperature display device (20A), which includes a time information image indicating time information and a temperature information image displaying information about a temperature and an elapsed time by a change in color, and to which image pickup time information indicating a time at which the image is picked up by a reading processing apparatus (10A) for a temperature display device (20A) is added;
a storage (42) configured to store, for each temperature, color fading information, which indicates a relation between information about a color, an elapsed time, and a temperature; and
a controller (43) configured to estimate an ambient temperature of the temperature display device (20A) based on color information about a color changed by a temperature that is detected from temperature information of the temperature information image and by the elapsed time, on an elapsed time that is calculated from the time information of the time information image, and on the color fading information stored in the storage (42),
wherein the communicator (41) is configured to output information indicating the estimated ambient temperature of the temperature display device (20A) to the reading processing apparatus (10A) for a temperature display device (20A).

7. A reading processing system for a temperature display device (20A), comprising:
a reading processing apparatus (10A) for a temperature display device (20A); and
a server apparatus (40),
wherein the reading processing apparatus (10A) for a temperature display device (20A) includes:
an image pickup device (101) configured to pick up an image of the temperature display device (20A), which includes a time information image indicating time information and a temperature information image displaying information about a temperature and an elapsed time by a change in color;
a communicator (107) configured to add information indicating an image pickup time at which the image is picked up to the image of the temperature display device (20A) picked up by the image pickup device, transmit the image with the added information to the server apparatus (40), and receive information transmitted from the server apparatus (40) and indicating an ambient temperature of the temperature display device (20A); and
a display (104) configured to display the received information indicating the ambient temperature of the temperature display device (20A), and
wherein the server apparatus (40) includes:
a communicator (41) configured to obtain the image of the temperature display device (20A), which is picked up by the reading processing apparatus (10A) for a temperature display device (20A), which includes the time information image indicating the time information and the temperature information image displaying information about a temperature and an elapsed time by a change in color, and to which image pickup time information indicating the image pickup time is added, and output, to the reading processing apparatus (10A) for a temperature display device (20A), the information indicating the ambient temperature of the temperature display device (20A) that is estimated by a controller (43);
a storage (42) configured to store, for each temperature, color fading information, which indicates a relation between information about a color, an elapsed time, and a temperature; and
a controller (43) configured to estimate the ambient temperature of the temperature display device (20A) based on color information about a color changed by a temperature that is detected from temperature information of the temperature information image and by the elapsed time, on an elapsed time that is calculated from the time information of the time information image and from the image pickup time, and on the color fading information stored in the storage storage (42).

8. A method of controlling a reading processing apparatus (10) for a temperature display device (20), the reading processing apparatus (10) including a storage (105), which is configured to store, for each temperature, color fading information indicating a relation between a color changed by a temperature change, an elapsed time, and a temperature, the method comprising:
obtaining, by an obtaining device (101), an image of a temperature display device (20), which is picked up by the reading processing apparatus (10) for the temperature display device (20), which includes a time information image indicating time information and a temperature information image displaying information about a temperature and an elapsed time by a change in color, and to which image pickup time information indicating an image pickup time at which the image is picked up is added;
recognizing, by a temperature estimation device (106), color information about a color changed by a temperature that is detected from temperature information of the temperature information image and by the elapsed time;
calculating, by the temperature estimation device (106), an elapsed time from the time information of the time information image and from the image pickup time; and
estimating, by the temperature estimation device (106), an ambient temperature of the temperature display device (20) based on the color information, on the elapsed time, and on the color fading information stored in the storage (105).
